**Europäisches Patentamt**

**European Patent Office**

**Office européen des brevets**

(19)

(11) Veröffentlichungsnummer: **0 192 818
B1**

(12) # EUROPÄISCHE PATENTSCHRIFT

(45) Veröffentlichungstag der Patentschrift:
**22.06.88**

(21) Anmeldenummer: **85111860.4**

(22) Anmeldetag: **19.09.85**

(51) Int. Cl.⁴: **H 01 G 1/035,** H 01 G 1/14,
H 01 G 1/02

(54) **Kunststoffolien-Wickelkondensator in Chipbauweise.**

(30) Priorität: **20.02.85 DE 3505888**

(43) Veröffentlichungstag der Anmeldung:
**03.09.86 Patentblatt 86/36**

(45) Bekanntmachung des Hinweises auf die Patenterteilung:
**22.06.88 Patentblatt 88/25**

(84) Benannte Vertragsstaaten:
**AT BE CH DE FR GB IT LI LU NL SE**

(56) Entgegenhaltungen:
DE - A - 1 614 611
DE - A - 2 353 154
DE - A - 2 927 011
DE - A - 3 125 711
DE - A - 3 225 782
DE - A - 3 320 257
GB - A - 1 097 609
US - A - 4 255 779
US - A - 4 333 213
US - A - 4 417 298
US - A - 4 455 591

(73) Patentinhaber: **Westermann, Wolfgang,
Schellingstrasse 7, D-6800 Mannheim 1 (DE)**

(72) Erfinder: **Westermann, Wolfgang, Schellingstrasse 7,
D-6800 Mannheim 1 (DE)**

(74) Vertreter: **Altenburg, Udo, Dipl.-Phys. et al, Patent- und
Rechtsanwälte
Bardehle-Pagenberg-Dost-Altenburg-Frohwitter &
Partner Postfach 86 06 20, D-8000 München 86 (DE)**

# Beschreibung

Die vorliegende Erfindung betrifft einen Kunststoffolien-Wickelkondensator in Chipbauweise, insbesondere einen metallisierten Flachwickelkondensator.

Es sind Kunststoffolien-Wickelkondensatoren in Chipbauweise bekannt, vgl. z.B. DE-OS 3 320 257, die mit duroplastischen Kunststoffpressmassen umhüllt sind und die an ihren Stirnseiten Anschlusselemente aus dünnem Blech aufweisen. Beide Massnahmen dienen dem Schutz des empfindlichen Wikkelkondensatorkörpers vor Belastungen, die beim Tauchlöten durch direkten Kontakt des gesamten Wickelkondensatorkörpers mit flüssigem Zinn bei einer Temperatur von ca. 250°C und einer Lötdauer von ca. 5 sec auftreten. Die duroplastische, bei der Löttemperatur formstabil bleibende Umhüllung verhindert ein Aufbauchen des Wickelkondensatorkörpers, zu dem dieser aufgrund von zwischen den einzelnen Wickellagen eingeschlossener Luft und der Schrumpfung der gereckten Kunststoffolien tendiert. Die Anschlusselemente aus dünnem Blech mit einer Stärke ab vorzugsweise 0,1 mm bilden einen guten Wärmewiderstand zum Wickelkondensatorkörper hin.

Aus der US-PS 4 455 591 ist ein Kunststoffolien-Wickelkondensator in Chipbauweise mit einer duroplastischen Epoxidharzumhüllung bekannt, bei welchem die über die Umhüllung überstehenden Teile der radial am Wickelkondensatorkörper kontaktierten Anschlussdrähte entfernt und die Drahtenden mit Anschlussblechkappen verbunden sind.

Die Umhüllungstechnik mit duroplastischen Kunststoffpressmassen weist jedoch bei Kunststoffolienkondensatoren einige Unzulänglichkeiten auf. Der Umhüllungsprozess muss bei hohen Drükken und Temperaturen zwischen 150 und 180°C durchgeführt werden, wodurch z.B. bei Dünnstfolienkondensatoren aus Polyester eine Schrumpfung der Kunststoffolien und eine Wärmebeschädigung des Dielektrikummaterials verursacht werden kann. Bei metallisierten regenerierfähigen Wickelkondensatoren bewirkt zudem der durch den Umhüllungsdruck hervorgerufene erhöhte Lagendruck im Wikkelkondensatorkörper eine Beeinträchtigung der Regenerierfähigkeit und somit die Gefahr eines verschlechterten Isolationswiderstandes.

Des weiteren ist bei kleinen Bauelementen wie Chip-Kondensatoren die Wirtschaftlichkeit dieser Umhüllungstechnik dadurch beeinträchtigt, dass der Nutzungsgrad des eingesetzten Materials äusserst gering ist. Die Umhüllung am Endprodukt macht nur weniger als 10% des eingesetzten Materials aus, während der Rest als Angussspinne anfällt. Ein Wiederverspritzen des Angussspinnenmaterials ist jedoch ausgeschlossen, da es sich um einen Duroplast handelt. Somit fällt nach der Verarbeitung über 90% des eingesetzten teuren Kunststoffpressmaterials als unvermeidlicher Ausschuss an.

Die Anschlusselemente aus dünnem Blech bei den bekannten Chip-Kondensatoren sind im Vergleich zu den Anschlussdrähten bei konventionellen Wickelkondensatoren erheblich teurer. Aus Automatisierungsgründen werden verzinnte Metallbänder so ausgestanzt, dass die Wickelkondensatorkörper reihenweise kontaktiert werden können, wodurch sich Verarbeitungseinheiten ergeben. Zur Schaffung der geeigneten Zwischenräume vor dem Kontaktieren wird bereits ein grosser Anteil des relativ teuren Bandmaterials herausgestanzt und fällt somit als Abfall an. Nach der Umhüllung der Wickelkondensatorkörper in der Verarbeitungseinheit müssen ausserdem die Verbindungsstege zur Vereinzelung herausgestanzt werden. Auf diese Weise kann nur ein winziger Bruchteil des hochwertigen Bandmaterials für die eigentliche Aufgabe als Anschlusselement genutzt werden. Das übrige Bandmaterial ist Abfall, für den im besten Fall nach Ansammlung grösserer Mengen ein Schrotterlös erzielt werden kann.

Die Aufgabe der vorliegenden Erfindung besteht darin, einen einfacher und wirtschaftlicher herstellbaren Kunststoffolien-Wickelkondensator in Chipbauweise mit verbesserten elektrischen Eigenschaften zu schaffen, der beim Lötvorgang zur Befestigung an einer Leiterplatte auch formstabil ist und guten Wärmewiderstand der Anschlüsse aufweist.

Diese Aufgabe wird erfindungsgemäss durch einen Kunststoffolien-Wickelkondensator gemäss Anspruch 1 gelöst. Dieser erfindungsgemässe Kunststoffolien-Wickelkondensator in Chipbauweise entspricht in bezug auf seine elektrischen Eigenschaften und die Kostengünstigkeit seiner Herstellung den konventionell bedrahteten Kunststoffolien-Wickelkondensatoren. Die Becherumhüllung des erfindungsgemässen Kondensators wird mit Hilfe des heute üblicherweise von allen Kondensatorherstellern für Kunststoffolien-Wickelkondensatoren verwendeten Bechervergiessverfahrens hergestellt. Dieses Verfahren hat sich bei Kunststoffolien-Wikkelkondensatoren deswegen durchgesetzt, weil es kostengünstig mit geringem Materialaufwand bzw. Materialabfall und automatisiert mit hoher Produktivität realisiert werden kann, wobei gleichzeitig eine hohe Güte der Umhüllung, z.B. hohe Feuchtesicherheit erreicht wird. Der heutige Stand der Technik kennt moderne Dosieranlagen für Giessharz, welche die benötigten Mengen genau auf die Stückzahl der zu vergiessenden Kondensatoren berechnen, so dass kein Überschuss als Abfall anfällt. Andererseits ist heute auch die Becherherstellung praktisch abfallfrei, insbesondere bei Verwendung von thermoplastischen Materialien, deren Angussspinnen wieder vermahlen und somit erneut verspritzt werden können.

Ein radial bedrahteter Kunststoffolien-Wickelkondensator mit einer solchen bekannten sehr wirtschaftlichen und technisch hochwertigen giessharzvergossenen Becherumhüllung wird erfindungsgemäss in überraschend einfacher Weise dadurch zu einem Chip-Kondensator weiterentwickelt, dass die Anschlussdrähte um 180° umgebogen und auf der Aussenseite der Becherumhüllung mit einem Blechabschnitt verbunden werden. Dieser erfindungsgemässe Chip-Kondensator kann mit Ausnahme eines zusätzlichen abschliessenden Arbeitsgangs identisch wie ein bedrahteter Kondensator hergestellt werden. Der grosse Vorteil liegt auf der Hand: Der Kondensatorhersteller kann für die Herstellung des Chip-Kondensators gemäss der vorliegenden Erfindung praktisch die gleichen, hochproduktiven Einrichtungen nutzen, die er für die herkömmlichen Kondensatoren im Einsatz hat. Nur für den abschliessenden Arbeitsgang, bei dem der bedrahtete Kondensator in einen Chip-Kondensator mit Anschlussblechen umgewandelt wird, werden Zusatzeinrichtungen benötigt. Die Verwendung von schmalen Blechabschnitten für die Anschlusselemente, die abfallfrei abgelängt werden können, bedeutet eine hundertprozentige Ausnutzung dieses teuren Vormaterials die bei den bekannten Ausführungsformen von Chip-Kondensatoren bisher nicht möglich war. Neben den wirtschaftlichen Aspekten sind auch gravierende technische Vorteile gegenüber den bekannten Ausführungsformen hervorzuheben:

Die giessharzvergossene Becherumhüllung umschliesst praktisch drucklos den Wickel und beeinträchtigt somit die Regenerierfähigkeit und den daraus resultierenden Isolationswiderstand nicht. Die Aushärtung des Giessharzes findet bei Temperaturen von ca. 100°C oder tiefer statt, so dass eine Wärmevorschädigung des empfindlichen Dielektrikums ausgeschlossen ist. Die Formstabilität während und nach dem Lötvorgang zur Befestigung des Chip-Kondensators auf einer Leiterplatte wird auch bei dünnen Becherwandstärken durch die Auswahl eines geeigneten Materials wie z.B. eines Polyestermaterials mit einer Verarbeitungstemperatur von 340°C bis 370°C garantiert. Der Wärmewiderstand wird durch die Zwischenschaltung eines dünnen Anschlussdrahtes, der aus einem schlecht wärmeleitenden Metall wie z.B. Neusilber bestehen kann, weiterhin verbessert. Die Kontaktierungsgüte verbessert sich beim Lötvorgang automatisch durch infolge Kapillarwirkung zwischen Draht und Blechabschnitt eindringendes flüssiges Zinn.

Weitere Vorteile, Merkmale und Anwendungsmöglichkeiten der vorliegenden Erfindung ergeben sich aus der nachfolgenden Beschreibung eines Ausführungsbeispieles in Verbindung mit der Zeichnung. Darin zeigen:

Fig. 1 eine perspektivische schematische Ansicht eines radial bedrahteten Kunststoffolien-Wickelkondensators mit einer Ausführungsform eines erfindungsgemäss ausgebildeten Bechers, und

Fig. 2 eine der Fig. 1 entsprechende Ansicht mit umgebogenen Anschlussdrähten und schematisch dargestellten Blechabschnitten vor ihrer Verbindung mit den Anschlussdrähten, und

Fig. 3 eine der Fig. 1 entsprechende Ansicht einer Ausführungsform des erfindungsgemässen Chip-Kondensators.

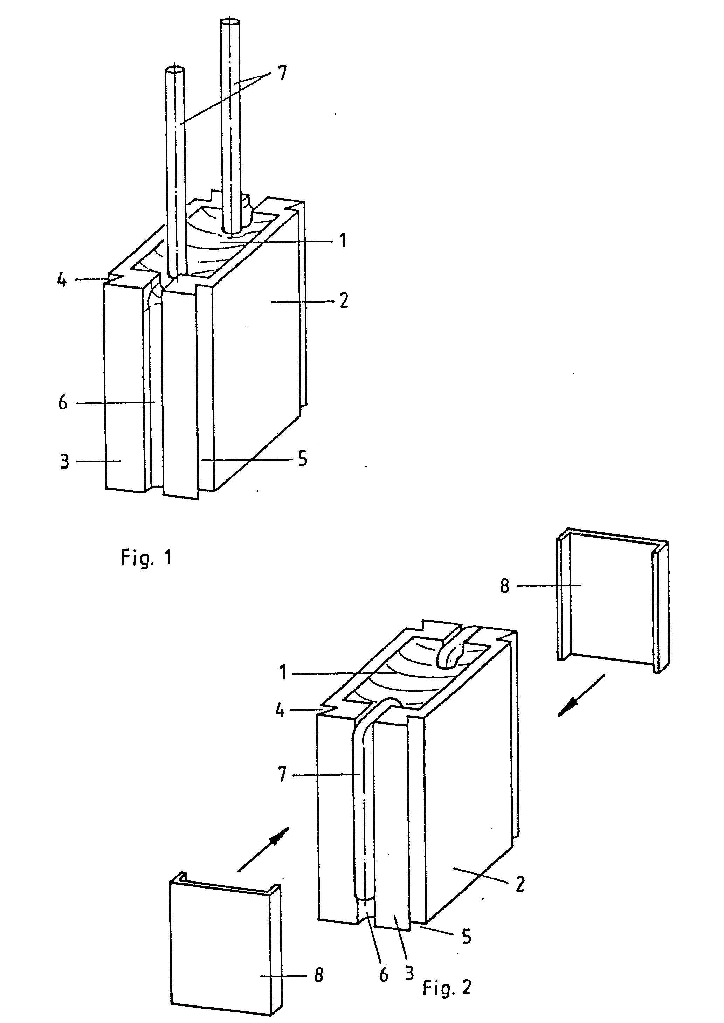

In Fig. 1 ist ein Kunststoffolien-Wickelkondensator mit einem Giessharzverguss 1 und einem Becher 2 dargestellt, dessen Abmessungen den Massen eines Chip-Kondensators entsprechen. Die Schmalseiten 3 des Bechers 2 sind schwalbenschwanzförmig ausgebildet, d.h. sie weisen an ihrer Oberkante 4 und an ihrer Unterkante 5 schwalbenschwanzartige Hinterschneidungen auf. Die Schmalseite 3 wird jeweils durch eine Längsnut 6 geteilt, die snap-in-mässig (der Querschnitt der Nut 6 ist etwas geringer als Querschnitt des Anschlussdrahtes 7) ausgeführt ist und zur Aufnahme eines Anschlussdrahtes 7 dient.

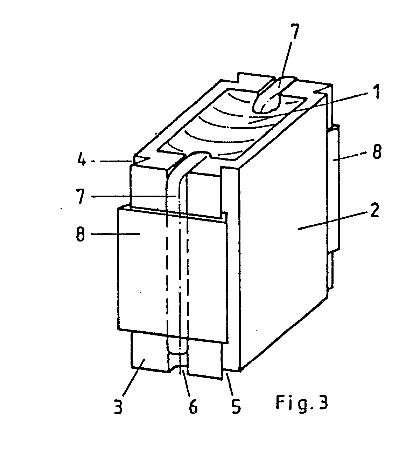

Der Chip-Kondensator wird genauso wie ein bedrahteter Kondensator mit radial am Wickelkondensatorkörper kontaktierten Anschlussdrähten gefertigt. Vergiessen im Spezialbecher 2 und Prüfen sowie Bedrucken des Kondensators erfolgen genauso wie beim bedrahteten Kondensator. Erst danach beginnen weitere Arbeitsschritte, die den bedrahteten Kondensator in einen Chip-Kondensator umwandeln. Die beiden Anschlussdrähte 7 werden um 180° umgebogen und in die Snap-In-Nuten 6 hineingelegt. Auf die Schmalseite 3 des Bechers 2 und über die eingelegten Drähte 7 werden glatte, rechteckige, verzinnte Blechabschnitte 8 aufgebracht, wie aus Fig. 2 hervorgeht. Umgebogene Randbereiche der Blechabschnitte 8 greifen in die schwalbenschwanzartigen Hinterschneidungen an der Oberkante 4 und der Unterkante 5 der Schmalseite 3 des Bechers 2 ein, wodurch die Blechabschnitte 8 am Becher 2 befestigt und mit den Anschlussdrähten verbunden werden. Die Blechabschnitte 8 und die darunterliegenden Drähte 7 stehen, da die Drähte 7 etwas über die Nuten 6 hinausragen, miteinander in Druckkontakt. Durch ein geeignetes Verfahren werden die Blechabschnitte 8 und die darunterliegenden Drähte 7 anschliessend miteinander verschweisst. Der fertige Chip-Kondensator ist schematisch in Fig. 3 dargestellt.

Ein technischer Vorteil der in den Figuren dargestellten Ausführungsform besteht darin, dass der Blechabschnitt 8 von der Oberkante 4 bis zur Unterkante 5 der stirnseitigen Schmalseite 3 des Bechers 2 reicht. Dieses ist bei den bekannten umpressten Ausführungsformen von Chip-Kondensatoren wegen des Austritts des Anschlussbleches an der Naht nur an einer Kante möglich. Dadurch ist die erfindungsgemässe Ausführungsform ausserordentlich «abschattungssicher» — Abschattung bedeutet hier ein Nichtbenetzen von Anschlussfahne und Lötauge mit Lötzinn — auch bei grosser Packungsdichte der Chip-Kondensatoren auf einer Leiterplatte. Gleichzeitig ist diese Ausführungsform universell einsetzbar für alle gängigen Löttechniken wie Leitklebe-, Reflow- und Schwallötung.

## Patentansprüche

1. Kunststoffolien-Wickelkondensator in Chipbauweise, insbesondere metallisierter Flachwickelkondensator, mit einer giessharzvergossenen Becherumhüllung (1, 2) und mit radial am Wickelkondensatorkörper kontaktierten Anschlussdrähten (7), die um 180° umgebogen und auf einer einander gegenüberliegenden Aussenseite (3) der Becherumhüllung (1, 2) jeweils mit einem Anschlussblechabschnitt (8) verbunden sind.

2. Kondensator nach Anspruch 1, dadurch gekennzeichnet, dass die Anschlussdrähte (7) zu den an die Becheröffnung angrenzenden Schmalseiten (3) des Kondensators hin umgebogen sind.

3. Kondensator nach Anspruch 1 oder 2, dadurch gekennzeichnet, dass auf den Aussenseiten (3) der Becherumhüllung (1, 2) jeweils eine Nut (6) vorgesehen ist, in welche der umgebogene Anschlussdraht (7) eingefügt ist.

4. Kondensator nach Anspruch 3, dadurch gekennzeichnet, dass der Querschnitt der Nut (6) etwas geringer als der Querschnitt des Anschlussdrahtes (7) ist.

5. Kondensator nach einem der Ansprüche 2 bis 4, dadurch gekennzeichnet, dass die Oberkante (4) und die Unterkante (5) der Schmalseiten (3) des Kondensators schwalbenschwanzartige Hinterschneidungen aufweisen, in welche umgebogene Randbereiche der Blechabschnitte (8) eingreifen.

6. Kondensator nach einem der Ansprüche 1 bis 5, dadurch gekennzeichnet, dass die Blechabschnitte (8) mit den Anschlussdrähten (7) verschweisst sind.

7. Kondensator nach einem der Ansprüche 1 bis 6, dadurch gekennzeichnet, dass die Becherumhüllung einen Becher (2) aus thermoplastischem Material, insbesondere aus Polyester, aufweist.

8. Kondensator nach einem der Ansprüche 1 bis 7, dadurch gekennzeichnet, dass die Anschlussdrähte (7) aus einem schlecht wärmeleitenden Material, z.B. aus Neusilber, bestehen.

## Claims

1. A plastic-film wound capacitor in chip configuration, in particular a metallized flat wound capacitor, with a poured resin encapsulation cup (1, 2) and with connecting wires (7) which radically make contact with the wound capacitor body, and which are bent through 180° and are connected on opposing external sides (3) of the encapsulation cup (1, 2) to respective sheet metal connection sections (8).

2. A capacitor according to Claim 1 characterized in that the connecting wires (7) are bent towards the narrow sides (3) bordering the cup opening of the capacitor.

3. A capacitor according to Claim 1 or 2 characterized in that on the external sides (3) of the encapsulation (1, 2) are respective grooves (6), into which the connecting wires (7) are inserted.

4. A capacitor according to Claim 3 characterized in that the cross-section of the groove (6) is somewhat less than that of the cross-section of the connecting wire (7).

5. A capacitor according to any one of Claims 2 to 4 characterized in that the upper edges (4) and the lower edges (5) of the narrow sides (3) of the capacitor are formed as dovetail-type undercuts, gripped by bent edges of the sheet metal section (8).

6. A capacitor according to any one of Claims 1 to 5 characterized in that the sheet metal sections (8) are soldered to the connecting wires (7).

7. A capacitor according to any one of Claims 1 to 6 characterized in that the encapsulation is in the form of a cup (2) of thermoplastic material, particularly of polyester.

8. A capacitor according to any one of Claims 1 to 7 characterized in that the connecting wires (7) are of a material with poor thermal conductivity, for example nickle silver.

## Revendications

1. Condensateur bobiné à feuille plastique, réalisé sous forme de microplaquette, notamment condensateur bobiné plat métallisé, comportant une enveloppe en forme de godet (1, 2) formée par moulage d'une résine et des fils de raccordement (7), qui sont raccordés radialement au corps du condensateur bobiné, sont repliés sur 180° et sont reliés à des éléments en tôle respectifs de raccordement (8), sur des côtés extérieurs opposés (3) de l'enveloppe en forme de godet (1, 2).

2. Condensateur selon la revendication 1, caractérisé en ce que les fils de raccordement (7) sont repliés en direction des petits côtés (3) du condensateur, qui limitent l'ouverture godet.

3. Condensateur selon la revendication 1 ou 2, caractérisé en ce que sur les côtés extérieurs (3) de l'enveloppe en forme de godet (1, 2) il est prévu des rainures respectives (6) dans lesquelles le fil replié de raccordement (7) est inséré.

4. Condensateur selon la revendication 3, caractérisé en ce que la section transversale de la rainure (6) est légèrement inférieure à la section transversale du fil de raccordement (7).

5. Condensateur selon l'une des revendications 2 à 4, caractérisé en ce que le bord supérieur (4) et le bord inférieur (5) des petits côtés (3) du condensateur possèdent des parties en dépouille en forme de queue d'aronde, dans lesquelles s'engagent des zones marginales repliées des éléments en tôle (8).

6. Condensateur selon l'une des revendications 1 à 5, caractérisé en ce que les éléments en tôle (8) sont soudés aux fils de raccordement (7).

7. Condensateur selon l'une des revendications 1 à 6, caractérisé en ce que l'enveloppe en forme de godet est constituée par un godet (2) réalisé en une matière thermoplastique, par exemple du polyester.

8. Condensateur selon l'une des revendications 1 à 7, caractérisé en ce que les fils de raccordement (7) sont constitués par une couche d'un mauvais conducteur de la chaleur par exemple du maillechort.

Fig. 1

Fig. 2

Fig. 3